# EUROPÄISCHE PATENTSCHRIFT

(11) **EP 1 794 417 B1**
(45) Veröffentlichungstag und Bekanntmachung des Hinweises auf die Patenterteilung: **22.07.2009**
(21) Anmeldenummer: 05787861.3
(22) Anmeldetag: 17.09.2005
(51) Int. Cl.: F01D 21/04, F01D 21/06, G01B 7/00, G01N 27/00, F02C 9/46

(54) **GASTURBINE UND VERFAHREN ZUM ABSCHALTEN EINER GASTURBINE BEI IDENTIFIKATION EINES WELLENBRUCHS**
GAS TURBINE AND METHOD FOR SHUTTING OFF A GAS TURBINE WHEN BREAKAGE OF A SHAFT IS IDENTIFIED
TURBINE A GAZ ET PROCEDE POUR INTERROMPRE LE FONCTIONNEMENT D'UNE TURBINE A GAZ LORS DE L'IDENTIFICATION DE LA RUPTURE D'UN ARBRE

(30) Priorität: 01.10.2004 DE 102004047892
(43) Veröffentlichungstag der Anmeldung: 13.06.2007
(73) Patentinhaber: MTU Aero Engines GmbH, 80995 München (DE)
(72) Erfinder: METSCHER, Martin, 81539 München (DE)
(86) Internationale Anmeldenummer: PCT/DE2005/001640
(87) Internationale Veröffentlichungsnummer: WO 2006/037286

(56) Entgegenhaltungen:
- DE-A1- 2 062 047
- DE-A1- 10 310 900
- DE-A1- 19 727 296
- GB-A- 1 239 349
- SU-A1- 1 229 563
- US-A- 2 815 818
- US-A- 5 411 364
- US-A1- 2003 091 430
- PATENT ABSTRACTS OF JAPAN Bd. 015, Nr. 321 (M-1147), 15. August 1991 (1991-08-15) & JP 03 121219 A (MITSUBISHI HEAVY IND LTD), 23. Mai 1991 (1991-05-23)

## Beschreibung

Die Erfindung betrifft eine Gasturbine nach dem Oberbegriff des Patentanspruchs 1. Weiterhin betrifft die Erfindung ein Verfahren zum Abschalten einer Gasturbine bei Identifikation eines Wellenbruchs nach dem Oberbegriff des Patentanspruchs 6.

Gasturbinen, wie zum Beispiel Flugtriebwerke, umfassen neben einer Brennkammer mindestens einen Verdichter und mindestens eine Turbine. Bei Gasturbinen, die lediglich einen einzigen Verdichter sowie eine einzige Turbine aufweisen, sind der Verdichter und die Turbine über eine einzige rotierende Welle miteinander verbunden. Verfügt die Gasturbine über zwei Verdichter sowie zwei Turbinen, nämlich über einen Niederdruckverdichter, einen Hochdruckverdichter, eine Hochdruckturbine sowie eine Niederdruckturbine, so sind der Niederdruckverdichter sowie die Niederdruckturbine über eine erste Welle sowie der Hochdruckverdichter sowie die Hochdruckturbine über eine zweite Welle miteinander verbunden. Die beiden Wellen verlaufen dann in der Regel koaxial zueinander, wobei eine der beiden Wellen die andere umschließt.

Überdrehzahlen einer Gasturbine in Folge eines Wellenbruchs müssen sicher vermieden werden. Tritt ein Wellenbruch auf, so entnimmt ein mit der gebrochenen Welle gekoppelter Verdichter der entsprechenden Turbine keine Leistung mehr, wodurch ein Überdrehen der Turbine verursacht wird. Da durch Überdrehzahlen erhebliche Schäden an der Gasturbine verursacht werden können, müssen Wellenbrüche sicher detektiert bzw. identifiziert werden, um als Reaktion hierauf die Gasturbine abzuschalten.

Die DE 195 24 992 C1 offenbart ein Verfahren zur Regelung eines Wellentriebwerks mit einem Mikrosteuergerät mit Überwachung des Triebwerk auf Wellenbruch und Überdrehzahl. Nach dem dort offenbarten Verfahren werden mithilfe von Sensoren Drehzahlen gemessen und auf Basis dieser Drehzahlen wird das Triebwerk auf Wellenbruch und Überdrehzahl geprüft. Wird eine derartige Fehlfunktion erkannt, so wird die Brennstoffzufuhr zur Brennkammer unterbrochen und die Gasturbine wird deaktiviert.

Im Zusammenhang mit dem in DE 195 24 992 C1 offenbarten Verfahren ist die Bestimmung einer Differenzdrehzahl zwischen einem verdiehterseitigen Ende bzw. Abschnitt und einem turbinenseitigen Ende bzw. Abschnitt der Gasturbinenwelle erforderlich. Demnach müssen an mindestens zwei Punkten, an einem ersten verdichterseitigen Punkt und an einem zweiten turbinenseitigen Punkt, Drehzahlen erfasst werden. Speziell im heißen Turbinenbereich erfordert eine Drehzahlbestimmung aufwendige Vorkehrungen, wodurch sich die Umsetzung des aus dem Stand der Technik bekannten Verfahrens als teuer und aufwendig erweist. Weiterhin ist das aus DE 195 24 992 C1 bekannte Verfahren nur an ein- bzw. zweiwelligen Gasturbinen einsetzbar. Für mehrwellige Gasturbinen hingegen ist dieses aus dem Stand der Technik bekannte Verfahren nicht praktikabel. Dies trifft insbesondere auf mehr als zweiwellige Gasturbinen zu, da eine von rotierenden Wellen umgebene Welle nicht ohne weiteres auf ein stehendes Referenzsystem bezogen werden kann.

Das Dokument DE 197 27 296 A1 offenbart eine Gasturbine mit mindestens einem Verdichter, einer Turbine und einer Brennkammer, wobei der Brennkammer über eine Kraftstoffpumpe Kraftstoff zuführbar ist, und wobei bei Indentifikation eines Bruchs einer Welle, die einen Verdichter mit einer Turbine koppelt, die Gasturbine abschaltbar ist. Eine Schaltvorrichtung stellt eine bei Bruch einer Welle erfolgende, axiale Verschiebung eines Rotors fest und aktiviert über eine Signalleitung ein Stellglied zum Unterbrechen der Kraftstoffzufuhr. Bevorzugt bildet eine elektrische Leitung die Signalleitung und wird bei axialer Verschiebung von Zähnen am Rotor durchtrennt. Die elektrische Leitung ist stationär, d.h. nichtrotierend angeordnet.

Das Dokument DE 103 10 900 A1 offenbart ein elektronisches Sicherheitssystem zur Vermeidung eines Überdrehzahlzustandes bei einem Wellenbruch, wobei ein Mess-Lichtleiter auf einer Welle der Turbine angeordnet ist. Der Lichtleiter ist mit einem optischen Sensor, einer Auswerteelektronik, einer elektronischen Steuerung und einem Kraftstoff-Absperrventil verbunden, das im Falle einer Durchtrennung des Lichtleiters die Brennstoffzufuhr unterbricht. Die durch die Welle geleitete, optische Energie wird somit nur indirekt zur Schaltung der Treibstoffzufuhr benutzt.

Hiervon ausgehend liegt der vorliegenden Erfindung das Problem zu Grunde, eine neuartige Gasturbine mit einer zuverlässigen und kostengünstigen Abschaltvorrichtung und ein neuartiges, zuverlässiges und kostengünstiges Verfahren zum Abschalten einer Gasturbine bei Identifikation eines Wellenbruchs derselben zu schaffen.

Dieses Problem wird durch eine Gasturbine gemäß Patentanspruch 1 gelöst. Erfindungsgemäß ist auf einer Welle mindestens ein Stromleiter angeordnet, der Bestandteil einer Stromversorgung für die Kraftstoffpumpe oder Bestandteil einer Stromversorgung für eine Kraftstoffpumpenregelung ist, wobei bei einem Wellenbruch und damit einem Bruch des oder jedes Stromleiters die Stromversorgung der Kraftstoffpumpe oder die Stromversorgung der Kraftstoffpumpenregelung unmittelbar unterbrochen wird, um die Gasturbine selbsttätig bzw. automatisch abzuschalten.

Bei der erfindungsgemäßen Gasturbine kann ein Wellenbruch sicher und einfach detektiert werden. Im Unterschied zum Stand der Technik ist bei der erfindungsgemäßen Gasturbine keine separate Einrichtung erforderlich, um bei einem Wellenbruch die Gasturbine abzuschalten. Vielmehr kann bei der Erfindung die Gasturbine unmittelbar aus der Integritätsüberwachung des oder jedes Stromleiters abgeschaltet werden. Dies erhöht die Zuverlässigkeit und reduziert die Kosten.

Das erfindungsgemäße verfahren zum Abschalten einer Gasturbine bei Identifikation eines Wellenbruchs derselben ist im unabhängigen Patentanspruch 6 definiert.

Bevorzugte Weiterbildungen der Erfindung ergeben sich aus den Unteransprüchen und der nachfolgenden Beschreibung.

Im einfachsten Ausführungsbeispiel der hier vorliegenden Erfindung wird eine Gasturbine vorgeschlagen, die über einen Verdichter, eine Turbine und eine Brennkammer verfügt, wobei der Verdichter und die Turbine über eine Welle miteinander verbunden sind, und wobei in die Brennkammer über eine Kraftstoffpumpe Kraftstoff eingeleitet wird. Um nun bei Auftreten eines Wellenbruchs der Welle, die den Verdichter und die Turbine miteinander koppelt, die Gasturbine zur Vermeidung von Überdrehzahlen abzuschalten, wird im Sinne der hier vorliegenden Verbindung vorgeschlagen, auf der Welle mindestens einen Stromleiter anzuordnen. Bei einer elektrisch betriebenen Kraftstoffpumpe ist der Stromleiter unmittelbar Bestandteil einer Stromversorgung für die Kraftstoffpumpe. Bei einer mechanisch betriebenen Kraftstoffpumpe, der eine Kraftstoffpumpenregelung zugeordnet ist, ist der Stromleiter Bestandteil einer Stromversorgung für die Kraftstoffpumpenregelung.

Tritt nun ein Wellenbruch auf, so wird auch die Integrität des oder jedes Stromleiters verändert, wobei bei einer Veränderung der Integrität des oder jedes Stromleiters die Stromversorgung der Kraftstoffpumpe bzw. der Kraftstoffpumpenregelung automatisch unterbrochen wird, um die Gasturbine abzuschalten. Ist der Stromleiter Bestandteil der Stromversorgung der Kraftstoffpumpe, so wird bei einem Wellenbruch und damit einem Bruch des Stromleiters die Stromversorgung der Kraftstoffpumpe unmittelbar unterbrochen. Ist der Stromleiter Bestandteil der Stromversorgung der Kraftstoffpumpenregelung, so wird bei einem Wellenbruch und damit bei einem Bruch des Stromleiters die Kraftstoffpumpenregelung unmittelbar unterbrochen. In beiden Fällen kann hierdurch die Gasturbine unmittelbar, d.h. ohne weitere Einrichtung, abgeschaltet werden.

Es liegt demnach im Sinne der hier vorliegenden Erfindung, auf mindestens einer zu überwachenden Welle mindestens einen elektrischen Stromleiter anzuordnen, der Bestandteil eines Stromkreises ist. Wird der oder jede elektrische Stromleiter bei einem Wellenbruch beschädigt, so wird der entsprechende Stromkreis unterbrochen und die Kraftstoffzufuhr zur Brennkammer kann unmittelbar abgeschaltet werden. Daraus ergibt sich eine einfache sowie sichere Abschaltung der Gasturbine bei einem Wellenbruch.

Es sei an dieser Stelle darauf hingewiesen, dass der oder jeder der rotierenden Welle zugeordnete Stromleiter teilweise innerhalb sowie teilweise außerhalb der Welle angeordnet sein kann. So können die Stromleiter entweder auf einer Innenseite oder eine Außenseite der Welle entlanggeführt werden.

Das erfindungsgemäße Prinzip ist auch auf einfache Art und Weise bei mehrwelligen Gasturbinen einsetzbar. Hierzu wird jeder Welle mindestens ein Stromleiter zugeordnet.

Mithilfe der hier vorliegenden Erfindung ist eine sichere Feststellung eines Wellenbruchs möglich. Infolgedessen können Baugruppe der Gasturbine, zum Beispiel die Rotoren, schlanker und leichter ausgeführt werden, was einerseits zu Gewichtseinsparungen und andererseits zu Kosteneinsparungen führt. Es sind nur relativ wenige Komponenten zur Feststellung des Wellenbruchs erforderlich. Das erfindungsgemäße System ist kompakt aufgebaut und detektiert einen Wellenbruch unmittelbar und direkt, ohne weitere Mechanismen berücksichtigen zu müssen. Die Erfindung kann mit einfachen Mitteln redundant ausgeführt werden. Es ist lediglich die Anzahl der verwendeten Stromleiter zu vervielfachen. An mehrwelligen Gasturbinen ist auf einfache und sichere Art und Weise ein Wellenbruch detektierbar und als Folge die Kraftstoffzufuhr zur Brennkammer unmittelbar abschaltbar.

## Patentansprüche

1. Gasturbine, insbesondere Flugtriebwerk, mit mindestens einem Verdichter, mindestens reiner Turbine und einer Brennkammer, wobei der Brennkammer über eine Kraftstoffpumpe Kraftstoff zuführbar ist, und wobei bei Identifikation eines Bruchs einer Welle, die einen Verdichter mit einer Turbine koppelt, die Gasturbine abschaltbar ist,
**dadurch gekennzeichnet,**
**dass** auf der oder jeder Welle mindestens ein Stromleiter angeordnet ist, der Bestandteil einer Stromversorgung für die Kraftstoffpumpe oder Bestandteil einer Stromversorgung für eine Kraftstoffpumpenregelung ist, wobei bei einem Wellenbruch und damit einem Bruch des oder jedes Stromleiters die Stromversorgung der Kraftstoffpumpe oder der Kraftstoffpumpenregelung unmittelbar unterbrochen wird, um die Gasturbine automatisch abzuschalten.

2. Gasturbine nach Anspruch 1,
**dadurch gekennzeichnet,**
**dass** der oder jeder Stromleiter Bestandteil einer Stromversorgung der Kraftstoffpumpe ist, wobei bei einem Wellenbruch und damit einem Bruch des oder jedes Stromleiters die Stromversorgung der Kraftstoffpumpe unmittelbar unterbrochen wird, um die Gasturbine automatisch abzuschalten.

3. Gasturbine nach Anspruch 2,
**dadurch gekennzeichnet,**
**dass** die Kraftstoffpumpe elektrisch betrieben ist.

4. Gasturbine nach Anspruch 1,
**dadurch gekennzeichnet,**
**dass** der oder jeder Stromleiter Bestandteil einer Stromversorgung der Kraftstoffpumpenregelung ist, wobei bei einem Wellenbruch und damit Bruch des oder jedes Stromleiters die Kraftstoffpumpenregelung unmittelbar unterbrochen wird, um die Gasturbine automatisch abzuschalten.

5. Gasturbine nach Anspruch 4,
**dadurch gekennzeichnet,**
**dass** die Kraftstoffpumpe mechanisch betrieben ist.

6. Verfahren zum Abschalten einer Gasturbine bei Identifikation eines Wellenbruchs der Gasturbine,
**dadurch gekennzeichnet,**
**dass** die Integrität mindestens eines, auf einer Welle der Gasturbine angeordneten Stromleiters, der Bestandteil einer Stromversorgung für die Kraftstoffpumpe oder Bestandteil einer Stromversorgung für eine Kraftstoffpumpenreglung ist, derart überwacht wird, dass bei einem Wellenbruch und damit einem Bruch des oder jedes Stromleiters die Stromversorgung der Kraftstoffpumpe oder der Kraftstoffpumpenregelung unmittelbar unterbrochen wird, um die Gasturbine automatisch abzuschalten.

7. Verfahren nach Anspruch 6,
**dadurch gekennzeichnet,**
**dass** die Integrität mindestens eines Stromleiters überwacht wird, der Bestandteil einer Stromversorgung der Kraftstoffpumpe ist, wobei bei einem Wellenbruch und damit einem Bruch des oder jedes Stromleiters die Stromversorgung der Kraftstoffpumpe unmittelbar unterbrochen wird, um die Gasturbine abzuschalten.

8. Verfahren nach Anspruch 6,
**dadurch gekennzeichnet,**
**dass** die Integrität mindestens eines Stromleiters überwacht wird, der Bestandteil einer Stromversorgung der Kraftstoffpumpenregelung ist, wobei bei einem Wellenbruch und damit einem Bruch des oder jedes Stromleiters die Stromversorgung der Kraftstoffpumpenregelung unmittelbar unterbrochen wird, um die Gasturbine abzuschalten.

## Claims

1. Gas turbine, in particular aircraft engine, with at least one compressor, at least one turbine and a combustion chamber, wherein fuel can be fed to the combustion chamber via a fuel pump, and wherein the gas turbine can be shut down on identification of a break of a shaft connecting a compressor to a turbine,
**characterised in that**
on the or on each shaft there is provided at least one conductor which is part of a power supply for the fuel pump or part of a power supply for a fuel pump control, wherein, at a shaft break and thus at a break of the conductor(s), the power supply of the fuel pump or of the fuel pump control is interrupted immediately to shut down the gas turbine automatically.

2. Gas turbine according to claim 1,
**characterised in that**
the or each conductor is part of a power supply of the fuel pump, wherein, at a shaft break and thus at a break of the conductor(s), the power supply of the fuel pump is interrupted immediately to shut down the gas turbine automatically.

3. Gas turbine according to claim 2,
**characterised in that**
the fuel pump is operated electrically.

4. Gas turbine according to claim 1,
**characterised in that**
the or each conductor is part of a power supply of the fuel pump control, wherein, at a shaft break and thus at a break of the conductor(s), the power supply of the fuel pump control is interrupted immediately to shut down the gas turbine automatically.

5. Gas turbine according to claim 4,
**characterised in that**
the fuel pump is operated mechanically.

6. Method for shutting down a gas turbine on identification of a shaft break of the gas turbine,
**characterised in that**
the integrity of at least one conductor provided on a shaft of the gas turbine, which is part of a power supply for the fuel pump or part of a power supply for a fuel pump control, is monitored such that, at a shaft break and thus at a break of the conductor(s), the power supply of the fuel pump or of the fuel pump control is interrupted immediately to shut down the gas turbine automatically.

7. Method according to claim 6,
**characterised in that**
the integrity of at least one conductor which is part of a power supply of the fuel pump is monitored, wherein, at a shaft break and thus at a break of the conductor(s), the power supply of the fuel pump is interrupted immediately to shut down the gas turbine automatically.

8. Method according to claim 6,
**characterised in that**
the integrity of at least one conductor which is part of a power supply of the fuel pump control is monitored, wherein, at a shaft break and thus at a break of the conductor(s), the power supply of the fuel pump control is interrupted immediately to shut down the gas turbine automatically.

## Revendications

1. Turbine à gaz, en particulier moteur d'avion, comportant au moins un compresseur, au moins une turbine et une chambre de combustion, ladite chambre de combustion pouvant être alimentée en carburant par l'intermédiaire d'une pompe de carburant, et le fonctionnement de la turbine à gaz pouvant être interrompu lors de l'identification d'une rupture d'un arbre accouplant un compresseur avec une turbine, **caractérisée en ce qu'**au moins un conducteur de courant est disposé sur ledit ou chaque arbre, ledit conducteur de courant faisant partie d'une alimentation en courant pour la pompe de carburant ou d'une alimentation en courant pour une commande de pompe de carburant, l'alimentation en courant de la pompe de carburant ou de la commande de pompe de carburant étant immédiatement coupée dans le cas d'une rupture d'un arbre et donc d'une rupture dudit ou de chaque conducteur de courant afin d'interrompre automatiquement le fonctionnement de la turbine à gaz.

2. Turbine à gaz selon la revendication 1, **caractérisée en ce que** ledit ou chaque conducteur de courant fait partie d'une alimentation en courant de la pompe de carburant, ladite alimentation en courant de la pompe de carburant étant immédiatement coupée dans le cas d'une rupture d'un arbre et donc d'une rupture dudit ou de chaque conducteur de courant afin d'interrompre automatiquement le fonctionnement de la turbine à gaz.

3. Turbine à gaz selon la revendication 2, **caractérisée en ce que** la pompe de carburant est à fonctionnement électrique.

4. Turbine à gaz selon la revendication 1, **caractérisée en ce que** ledit ou chaque conducteur de courant fait partie d'une alimentation en courant de la commande de pompe de carburant, ladite commande de pompe de carburant étant immédiatement coupée dans le cas d'une rupture d'un arbre et donc d'une rupture dudit ou de chaque conducteur de courant afin d'interrompre automatiquement le fonctionnement de la turbine à gaz.

5. Turbine à gaz selon la revendication 4, **caractérisée en ce que** la pompe de carburant est à fonctionnement mécanique.

6. Procédé pour interrompre le fonctionnement d'une turbine à gaz lors de l'identification de la rupture d'un arbre de la turbine à gaz, **caractérisé en ce que** l'intégrité d'au moins un conducteur de courant disposé sur un arbre de la turbine à gaz, qui fait partie d'une alimentation en courant pour la pompe de carburant ou d'une alimentation en courant pour une commande de pompe de carburant, est surveillée de telle manière que l'alimentation en courant de la pompe de carburant ou de la commande de pompe de carburant est immédiatement coupée dans le cas d'une rupture d'un arbre et donc d'une rupture dudit ou de chaque conducteur de courant afin d'interrompre automatiquement le fonctionnement de la turbine à gaz.

7. Procédé selon la revendication 6, **caractérisé en ce que** l'intégrité d'au moins un conducteur de courant, qui fait partie d'une alimentation en courant de la pompe de carburant, est surveillée, l'alimentation en courant de la pompe de carburant étant immédiatement coupée dans le cas d'une rupture d'un arbre et donc d'une rupture dudit ou de chaque conducteur de courant afin d'interrompre le fonctionnement de la turbine à gaz.

8. Procédé selon la revendication 6, **caractérisé en ce que** l'intégrité d'au moins un conducteur de courant, qui fait partie d'une alimentation en courant de la commande de pompe de carburant, est surveillée, l'alimentation en courant de la commande de pompe de carburant étant immédiatement coupée dans le cas d'une rupture d'un arbre et donc d'une rupture dudit ou de chaque conducteur de courant afin d'interrompre le fonctionnement de la turbine à gaz.
